# FASCICULE DE BREVET EUROPEEN

(11) **EP 3 697 195 B1**
(45) Date de publication et mention de la délivrance du brevet: **16.06.2021**
(21) Numéro de dépôt: 18799573.3
(22) Date de dépôt: 02.10.2018
(51) Int. Cl.: A01D 34/68

(54) **BOITIER DE TRANSMISSION ET ENGIN ROULANT EQUIPE D'UN TEL BOITIER**
GETRIEBEGEHÄUSE UND RADFAHRZEUG MIT EINEM SOLCHEN GEHÄUSE
TRANSMISSION HOUSING, AND WHEELED VEHICLE COMPRISING A HOUSING OF THIS TYPE

(30) Priorité: 16.10.2017 FR 1759651
(43) Date de publication de la demande: 26.08.2020
(73) Titulaire: France Reducteurs, 85500 Les Herbiers (FR)
(72) Inventeur: TEILLET, Emmanuel, 85700 Les Chatelliers Chateaumur (FR); MORAND, Damien, 85250 Chavagnes En Paillers (FR)
(74) Mandataire: Ipsilon
(86) Numéro de dépôt international: PCT/FR2018/052423
(87) Numéro de publication internationale: WO 2019/077222

(56) Documents cités:
- CN-Y- 2 499 262
- US-A- 2 722 281
- US-A- 5 850 758

## Description

### DOMAINE DE L'INVENTION

L'invention concerne un boîtier de transmission et un engin roulant équipé d'un tel boîtier.

Elle concerne plus particulièrement un boîtier de transmission comprenant un corps de boîtier délimitant une enceinte et, disposés au moins partiellement à l'intérieur de ladite enceinte, un arbre d'entrée, un arbre de sortie et un mécanisme de transmission du mouvement de l'arbre d'entrée à l'arbre de sortie, ce mécanisme de transmission de mouvement comprenant au moins un embrayage, l'embrayage comprenant un élément menant et un élément mené, l'élément mené étant monté solidaire en rotation de l'arbre de sortie, au moins l'un des éléments mené ou menant de l'embrayage étant monté déplaçable pour le passage des éléments menant et mené de l'embrayage d'une position écartée l'un de l'autre correspondant à la position débrayée de l'embrayage à une position rapprochée l'un de l'autre correspondant à la position embrayée de l'embrayage, l'élément mené de l'embrayage comprenant une partie active d'embrayage et un manchon qui porte la partie active d'embrayage, la partie active d'embrayage étant en contact d'appui avec l'élément menant de l'embrayage en position embrayée de l'embrayage, le manchon étant coaxial à l'arbre de sortie et monté solidaire en rotation de l'arbre de sortie.

### ART ANTÉRIEUR

Un tel boîtier de transmission est connu, par exemple du document US 2 722 281 A. Toutefois, il se caractérise par un nombre de pièces élevé rendant difficile et long son montage en usine. En outre, du fait de la conception actuelle des boîtiers de transmission, il n'est généralement pas possible d'insérer l'arbre de sortie à l'état fermé du boîtier. En effet, un tel arbre de sortie supporte un grand nombre de pièces qui ne sont pas tenues à l'intérieur du boîtier, en l'absence de l'arbre de sortie.

### BUTS ET RÉSUMÉ

Un but de l'invention est de proposer un boîtier de transmission du type précité, dont la conception simplifiée permet une réduction du nombre de pièces et une facilité de montage en usine.

Un autre but de l'invention est de proposer un boîtier de transmission dont la conception permet une insertion aisée de l'arbre de sortie dans le boîtier, à l'état fermé du boîtier.

À cet effet, l'invention a pour objet un boîtier de transmission comprenant un corps de boîtier délimitant une enceinte et, disposés au moins partiellement à l'intérieur de ladite enceinte, un arbre d'entrée, un arbre de sortie et un mécanisme de transmission du mouvement de l'arbre d'entrée à l'arbre de sortie, ce mécanisme de transmission de mouvement comprenant au moins un embrayage, l'embrayage comprenant un élément menant et un élément mené, l'élément mené étant monté solidaire en rotation de l'arbre de sortie, au moins l'un des éléments mené ou menant de l'embrayage étant monté déplaçable pour le passage des éléments menant et mené de l'embrayage d'une position écartée l'un de l'autre correspondant à la position débrayée de l'embrayage à une position rapprochée l'un de l'autre correspondant à la position embrayée de l'embrayage, l'élément mené de l'embrayage comprenant une partie active d'embrayage et un manchon qui porte la partie active d'embrayage, la partie active d'embrayage étant en contact d'appui avec l'élément menant de l'embrayage en position embrayée de l'embrayage, le manchon étant coaxial à l'arbre de sortie et monté solidaire en rotation de l'arbre de sortie, tel que le manchon de l'élément mené est réalisé d'une seule pièce avec la partie active de l'élément mené et que le manchon est interposé entre l'arbre de sortie et le corps de boîtier.

Grâce au fait que le manchon est interposé entre l'arbre de sortie et le corps de boîtier, le manchon isole l'arbre de sortie de l'intérieur du boîtier. Un contact direct de l'arbre avec l'intérieur du boîtier est donc empêché.

Le manchon guide l'arbre de sortie sur toute la longueur de l'arbre disposée à l'intérieur du boîtier de transmission. Tout contact entre l'arbre de sortie et le corps de boîtier est évité. Il en résulte une simplification en termes d'étanchéité avec le boîtier, et une facilité de montage de l'arbre à l'intérieur du boîtier, à l'état fermé du boîtier.

Selon un mode de réalisation, l'arbre de sortie est, en position fermée de l'enceinte du boîtier, monté de manière amovible à l'intérieur de l'enceinte du boîtier. Il en résulte une possibilité de démontage aisée de l'arbre de sortie du boîtier de transmission.

Selon un mode de réalisation de l'invention, l'arbre de sortie est un arbre traversant le corps de boîtier et faisant saillie du corps de boîtier à travers deux ouvertures ménagées dans le corps de boîtier, et le manchon est au niveau de ces ouvertures, interposé entre l'arbre de sortie et le corps de boîtier.

Selon un mode de réalisation de l'invention, l'élément menant est enfilé sur le manchon.

Selon un mode de réalisation de l'invention, le manchon est intérieurement rainuré longitudinalement et est monté solidaire en rotation de l'arbre de sortie par l'intermédiaire d'au moins une saillie radiale externe de l'arbre de sortie, cette saillie radiale externe étant réalisée d'une seule pièce avec l'arbre de sortie ou formée d'au moins un élément rapporté sur l'arbre de sortie, cette au moins une saillie radiale externe s'insérant à coulissement dans une rainure longitudinale interne du manchon.

Selon un mode de réalisation de l'invention, le manchon fait au moins partiellement saillie du corps de boîtier.

Selon un mode de réalisation de l'invention, le manchon est monté solidaire en rotation de l'arbre de sortie par l'intermédiaire d'au moins un organe de liaison disposé à l'extérieur du corps de boîtier. Il en résulte une facilité de montage ou de démontage de l'arbre en position fermée du boîtier, en vue, par exemple, d'un montage de l'arbre de sortie postérieur à la fermeture du boîtier ou d'un remplacement de l'arbre de sortie.

Selon un mode de réalisation de l'invention, l'élément menant de l'embrayage est un élément rotatif apte à être entrainé en rotation par l'arbre d'entrée.

Selon un mode de réalisation de l'invention, l'embrayage est un embrayage non progressif, de préférence à crabotage, ou un embrayage progressif, de préférence à cônes ou à disques.

Selon un mode de réalisation de l'invention, le boîtier comprend, pour le passage de la position débrayée à la position embrayée, un dispositif de commande d'embrayage.

Selon un mode de réalisation de l'invention, l'élément mené est limité en déplacement axial au moins dans le sens d'un écartement de l'élément menant.

Selon un mode de réalisation de l'invention, le boîtier comprend au moins un organe de rappel des éléments menant et mené en position écartée l'un de l'autre correspondant à la position débrayée.

Selon un mode de réalisation de l'invention, le corps de boîtier est formé d'au moins deux coquilles assemblées l'une à l'autre en position fermée du boîtier.

L'invention a encore pour objet un engin roulant équipé d'un boîtier de transmission comprenant un corps de boîtier délimitant une enceinte et, disposés au moins partiellement à l'intérieur de ladite enceinte, un arbre d'entrée, un arbre de sortie et un mécanisme de transmission du mouvement de l'arbre d'entrée à l'arbre de sortie, ce mécanisme de transmission de mouvement comprenant au moins un embrayage, l'embrayage comprenant un élément menant et un élément mené, l'élément mené étant monté solidaire en rotation de l'arbre de sortie, au moins l'un des éléments mené ou menant de l'embrayage étant monté déplaçable axialement le long de l'arbre de sortie pour le passage des éléments menant et mené de l'embrayage d'une position écartée l'un de l'autre correspondant à la position débrayée de l'embrayage à une position rapprochée l'un de l'autre correspondant à la position embrayée de l'embrayage, l'élément mené de l'embrayage comprenant une partie active d'embrayage et un manchon qui porte la partie active d'embrayage, la partie active d'embrayage étant en contact d'appui avec l'élément menant de l'embrayage en position embrayée de l'embrayage, le manchon étant coaxial à l'arbre de sortie et monté solidaire en rotation de l'arbre de sortie, caractérisé en ce que le boîtier de transmission est du type précité, et en ce que l'arbre de sortie du boîtier de transmission est l'arbre d'entraînement des roues de l'engin.

### BRÈVE DESCRIPTION DES DESSINS

L'invention sera bien comprise à la lecture de la description suivante d'exemples de réalisation, en référence aux dessins annexés dans lesquels :
- La figure 1 représente une vue schématique d'un engin équipé d'un boîtier de transmission conforme à l'invention.
- La figure 2 représente, sous forme de trois vues de dessus parallèles, le passage de la position débrayée à la position embrayée.
- La figure 3 représente une vue d'un boîtier de transmission conforme à l'invention en position éclatée des éléments le constituant.

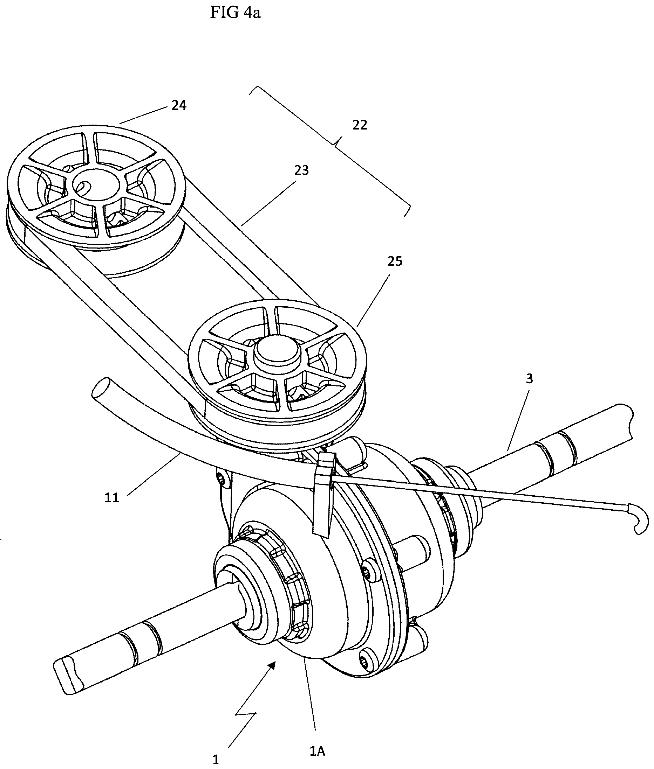

- La figure 4a représente une vue partiellement en perspective et schématique du boîtier de transmission et de la liaison au moteur de l'engin.

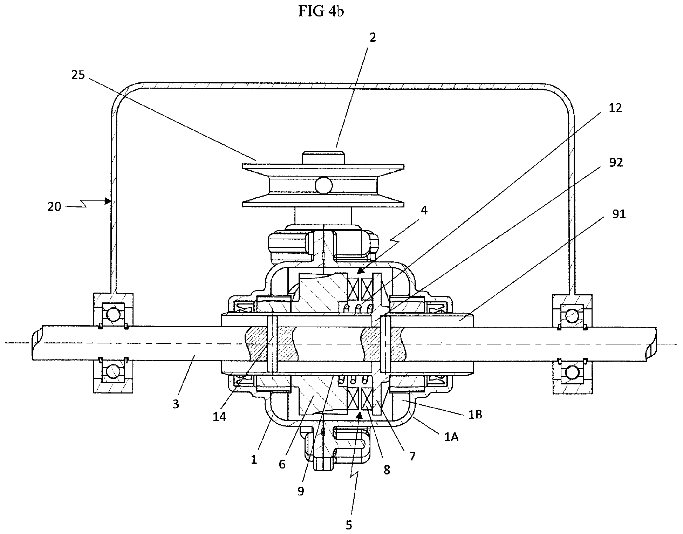

- La figure 4b représente une vue en coupe verticale passant par l'arbre de sortie du boîtier de transmission de la figure 4a.
- Les figures 5a et 5b représentent respectivement une vue schématique d'un boîtier de transmission en position débrayée de l'embrayage à cônes (figure 5a) et en position embrayée de l'embrayage à cônes (figure 5b).
- Les figures 6a et 6b représentent une vue schématique d'un boîtier de transmission en position débrayée de l'embrayage à disques (figure 6a) et en position embrayée de l'embrayage à disques (figure 6b).
- La figure 7 représente une vue en position éclatée des éléments le constituant d'un autre mode de réalisation d'un boîtier de transmission conforme à l'invention.
- Les figures 8 et 9 représentent des vues en coupe du boîtier de transmission de la figure 7 en position débrayée (figure 8) et en position embrayée (figure 9).
- Les figures 10A à 10F représentent, sous forme de vues en coupe ou en perspective, des modes de réalisation pour la solidarisation en rotation de l'arbre de sortie et du manchon.

### DESCRIPTION DÉTAILLÉE

Comme mentionné ci-dessus, l'invention concerne un boîtier 1 de transmission destiné à être installé sur un engin 20 roulant pour permettre l'entraînement en rotation des roues 26 de l'engin 20 à partir du moteur 21 équipant ledit engin.

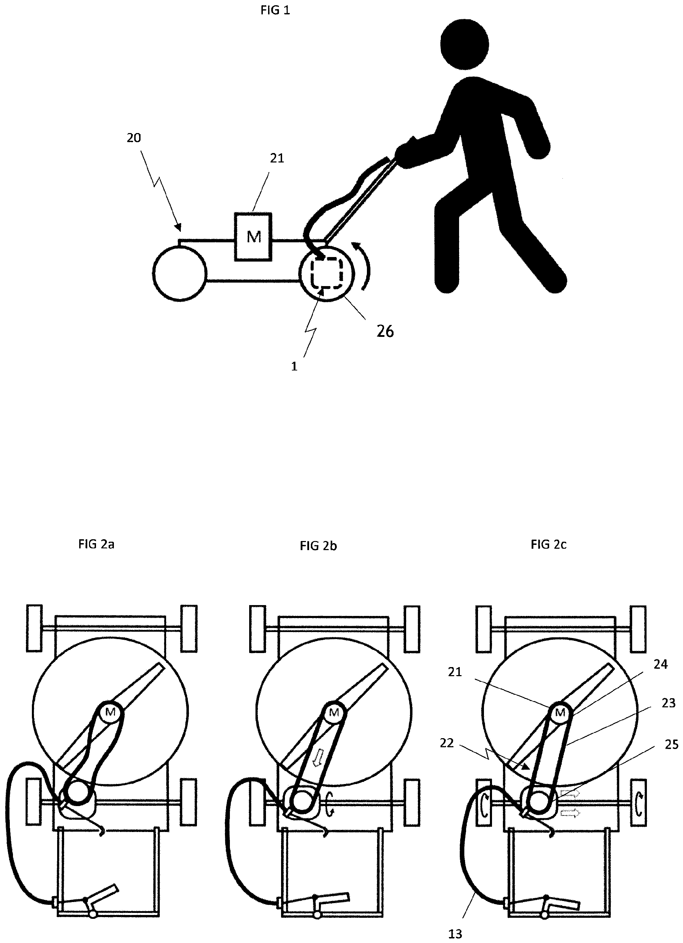

Le boîtier 1 de transmission est donc généralement disposé sur l'arbre d'entraînement en rotation des roues 26 de l'engin 20, comme représenté à la figure 1, cet arbre étant appelé, dans ce qui suit, l'arbre 3 de sortie du boîtier 1 de transmission.

L'engin 20 roulant est ici une tondeuse à gazon, mais l'invention peut s'appliquer à d'autres types d'engins roulants, notamment à conducteur marchant derrière l'engin 20.

Le boîtier 1 de transmission comprend un corps 1A de boîtier délimitant une enceinte 1B. Ce corps 1A de boîtier est, dans l'exemple représenté, formé de deux coquilles 1A1, 1A2 assemblées entre elles. La zone d'assemblage au niveau de laquelle les coquilles 1A1, 1A2 sont assemblées entre elles par collage et/ou vissage ou autres est appelée plan de joint.

Ce boîtier 1 de transmission comprend encore un arbre 2 d'entrée logé partiellement à l'intérieur de l'enceinte 1B du corps 1A de boîtier. À cet effet, une ouverture est ménagée dans le corps 1A du boîtier 1 de transmission.

Le boîtier 1 de transmission comprend encore, comme mentionné ci-dessus, un arbre 3 de sortie, également logé partiellement à l'intérieur du corps 1A de boîtier de transmission. Cet arbre 3 de sortie peut faire saillie du corps 1A de boîtier à travers une ou deux ouvertures 1C ménagées dans le corps 1A de boîtier. Dans l'exemple représenté, l'arbre 3 de sortie traverse le corps 1A de boîtier et fait saillie du corps 1A de boîtier à travers deux ouvertures représentées en 1C aux figures.

Le boîtier 1 de transmission comprend encore un mécanisme 4 de transmission de mouvement de l'arbre 2 d'entrée, qui est un arbre rotatif, à l'arbre 3 de sortie. L'arbre 2 d'entrée est lui-même entraîné en rotation par l'intermédiaire de moyens 22 de transmission sans fin extérieurs au boîtier 1. Ces moyens 22 de transmission sans fin comprennent une transmission sans fin à courroie 23 qui est disposée entre une poulie 24 motrice montée sur le moteur 21, en particulier sur l'arbre moteur dudit moteur 21, et une poulie 25 portée par l'arbre 2 d'entrée du boîtier 1 de transmission.

Bien évidemment, d'autres modes de réalisation des moyens d'entraînement en rotation de l'arbre d'entrée peuvent être envisagés sans sortir du cadre de l'invention.

La transmission de mouvement de rotation de l'arbre 2 d'entrée à l'arbre 3 de sortie s'opère à l'aide d'un mécanisme 4 de transmission de mouvement qui est logé à l'intérieur de l'enceinte 1B du boîtier 1 de transmission, et qui comprend au moins un embrayage 5.

Enfin, le boîtier 1 de transmission comprend un dispositif 9, 10 de commande de l'embrayage 5 pour le passage de l'embrayage 5 de la position débrayée à la position embrayée. Ce dispositif 9, 10 de commande de l'embrayage 5 peut être disposé à l'intérieur ou à l'extérieur du boîtier 1 de transmission.

L'embrayage 5 comprend un élément 6 menant et un élément 7 mené. L'élément 7 mené est monté solidaire en rotation de l'arbre 3 de sortie.

Au moins l'un des éléments mené 7 ou menant 6 de l'embrayage est monté déplaçable axialement le long de l'arbre de sortie, pour le passage des éléments menant 6 et mené 7 de l'embrayage 5 d'une position écartée l'un de l'autre correspondant à la position débrayée de l'embrayage 5 à une position rapprochée l'un de l'autre correspondant à la position embrayée de l'embrayage 5.

Dans tous les exemples représentés, c'est l'élément menant 6 qui, à l'aide du dispositif de commande 10, 11 d'embrayage, est déplaçable dans le sens d'un rapprochement de l'élément mené pour le passage des éléments menant 6 et mené 7 de l'embrayage 5 d'une position écartée l'un de l'autre à une position rapprochée l'un de l'autre.

Dans les exemples représentés, l'élément 7 mené de l'embrayage 5 comprend une partie 8 active d'embrayage et un manchon 9 qui porte la partie 8 active d'embrayage. Cette partie 8 active d'embrayage est en contact d'appui avec l'élément 6 menant de l'embrayage 5 en position embrayée de l'embrayage 5.

Le manchon 9 est quant à lui coaxial à l'arbre 3 de sortie et monté solidaire en rotation de l'arbre 3 de sortie. Ce manchon 9 de l'élément 7 mené est réalisé d'une seule pièce avec la partie 8 active de l'élément 7 mené, et le manchon 9 est interposé entre l'arbre 3 de sortie et le corps 1A de boîtier 1.

Ainsi, le manchon 9 s'étend, dans l'exemple représenté, d'une ouverture 1C à l'autre ouverture 1C du corps de boîtier, lorsque l'arbre 3 de sortie est un arbre traversant qui fait saillie du corps 1A de boîtier à travers lesdites ouvertes 1C. Le manchon 9 est ainsi, au niveau des ouvertures 1C, interposé entre l'arbre 3 de sortie et le corps 1A de boîtier.

La conception de l'embrayage 5 peut être diverse et variée, en fonction du type d'embrayage et de la conception du dispositif 10, 11 de commande d'embrayage. En effet, l'embrayage 5 peut être un embrayage non progressif, tel qu'un embrayage à crabotage, ou un embrayage progressif, tel qu'un embrayage à cônes ou à disques.

Le dispositif 10, 11 de commande d'embrayage comprend quant à lui un organe 10 de commande en rapprochement de l'élément menant de l'élément mené et un organe 11 de manœuvre de l'organe 10 de commande en rapprochement.

L'élément 6 menant de l'embrayage 5, qui est un élément rotatif apte à être entraîné en rotation par l'arbre 2 d'entrée peut être déplaçable axialement le long de l'arbre de sortie. Cet élément 6 menant peut être enfilé sur le manchon 9. D'autres modes de réalisation de cet élément 6 menant peuvent être envisagés.

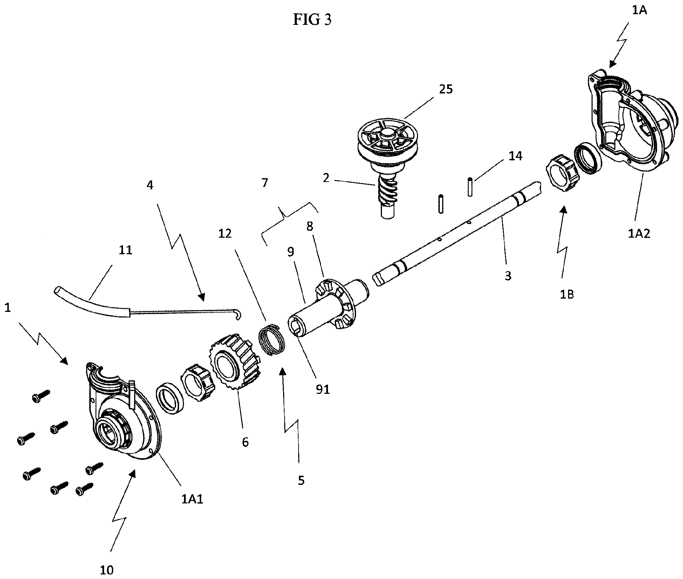

La figure 3 illustre l'exemple d'un embrayage 5 à crabotage. L'élément 6 menant est une roue dentée montée libre à rotation et déplaçable axialement le long de l'arbre 3 de sortie. Cette roue dentée est munie, sur sa face en regard de l'élément 7 mené, de dents. Cette roue dentée est en prise par engrènement avec une vis sans fin qui forme l'arbre d'entrée du boîtier 1.

La partie 8 active de l'élément 7 mené est quant à elle formée par un plateau entourant le manchon 9 et réalisé d'une seule pièce avec le manchon 9. Ce plateau est muni, sur sa face en regard de la roue dentée, de dents destinées à coopérer avec les dents de la roue dentée, en position embrayée de l'embrayage 5.

Dans ce mode de réalisation de la figure 3, le dispositif 10, 11 de commande en rapprochement de l'élément menant de l'élément mené comprend un organe 10 de commande en rapprochement formé par le corps 1A de boîtier déplaçable à coulissement le long du manchon 9 et de l'arbre 3 de sortie, et un organe 11 de manœuvre de l'organe 10 de commande formé par un ensemble câble/gaine couplable au corps 1A de boîtier pour le déplacement à coulissement du corps 1A de boîtier le long du manchon 9.

Dans les exemples représentés, l'embrayage 5 comprend un organe 12 de rappel de l'élément 6 menant et de l'élément 7 mené dans le sens d'un écartement l'un de l'autre, et le corps 1A de boîtier est configuré pour, au cours de son déplacement à coulissement le long de l'arbre 3 de sortie suivant une direction correspondant au passage de l'embrayage 5 de la position débrayée à la position embrayée, entraîner en déplacement l'élément 6 menant dans le sens d'un rapprochement de l'élément 7 mené à l'encontre de l'organe 12 de rappel. Cet organe 12 de rappel est formé par un ressort 12 hélicoïdal qui peut être disposé entre l'élément menant 6 et l'élément mené 7 ou entre l'élément mené 7 et le corps 1A du boîtier.

Pour permettre un tel déplacement à coulissement du corps 1A de boîtier le long de l'arbre 3 de sortie, le dispositif de commande d'embrayage 5 comprend un organe 11 de manœuvre de l'organe 10 de commande en rapprochement de l'élément 6 menant et de l'élément 7 mené couplable au corps 1A de boîtier, et le corps 1A de boîtier formant l'organe 10 de commande en rapprochement de l'élément 6 menant et de l'élément 7 mené est déplaçable à coulissement le long de l'arbre 3 de sortie suivant une direction correspondant au passage de l'embrayage 5 de la position débrayée à la position embrayée sous l'action d'une traction ou d'une poussée exercée sur ledit organe 11 de manœuvre, à l'état couplé de l'organe 11 de manœuvre au corps 1A de boîtier.

Cet organe 11 de manœuvre peut affecter un grand nombre de formes. Dans l'exemple représenté, cet organe 11 de manœuvre est un ensemble formé d'un câble et d'une gaine. Une patte disposée sur le corps 1A de boîtier couple cet ensemble au corps 1A de boîtier.

Dans l'exemple représenté, la gaine est couplée à une extrémité au corps 1A de boîtier et à son autre extrémité, au châssis de l'engin 20. Le câble est quant à lui fixé à une extrémité au châssis de l'engin 20 et à son autre extrémité au guidon de l'engin, via un levier pivotant actionnable par le conducteur de l'engin. L'actionnement de ce levier génère une traction sur le câble, et par suite, une déformation de la gaine, ce qui entraîne au moins un déplacement à coulissement du corps 1A de boîtier le long de l'arbre de sortie, comme illustré aux figures 2b et 2c.

Bien évidemment, d'autres modes de réalisation de cet organe 11 de manœuvre peuvent être envisagés sans sortir du cadre de l'invention.

Ainsi, l'ensemble câble/gaine aurait pu être remplacé par une tige de manœuvre, par un câble directement fixé au corps 1A de boîtier, ou autres.

Dans l'exemple représenté aux figures 2a à 2c, le corps 1A de boîtier est en outre monté oscillant autour de l'arbre 3 de sortie, dans le sens d'une tension ou d'un relâchement de la courroie 23 de transmission. L'organe 11 de manœuvre peut donc être utilisé d'une part pour, dans un premier temps, provoquer par oscillation du corps 1A de boîtier autour de l'arbre 3 de sortie, la tension de la courroie 23 de la transmission sans fin entre le moteur 21 et l'arbre 2 d'entrée, puis dans un deuxième temps, le déplacement à coulissement du corps 1A de boîtier le long de l'arbre 3 de sortie. Ce mouvement oscillant peut être supprimé lorsque l'organe 11 de manœuvre ne commande qu'un déplacement à coulissement du corps 1A de boîtier le long de l'arbre 3 de sortie, la courroie 23 étant soit tendue de manière permanente, soit tendue par un autre moyen.

L'entraînement en déplacement à coulissement du corps 1A de boîtier entraîne donc, dans ce mode de réalisation, le rapprochement de la roue dentée du plateau à dents. Le ressort 12 disposé entre les faces en regard du plateau et de la roue dentée rappelle la roue dentée et, par suite, le corps 1A de boîtier en position écartée du plateau à dents, correspondant à la position débrayée de l'embrayage 5.

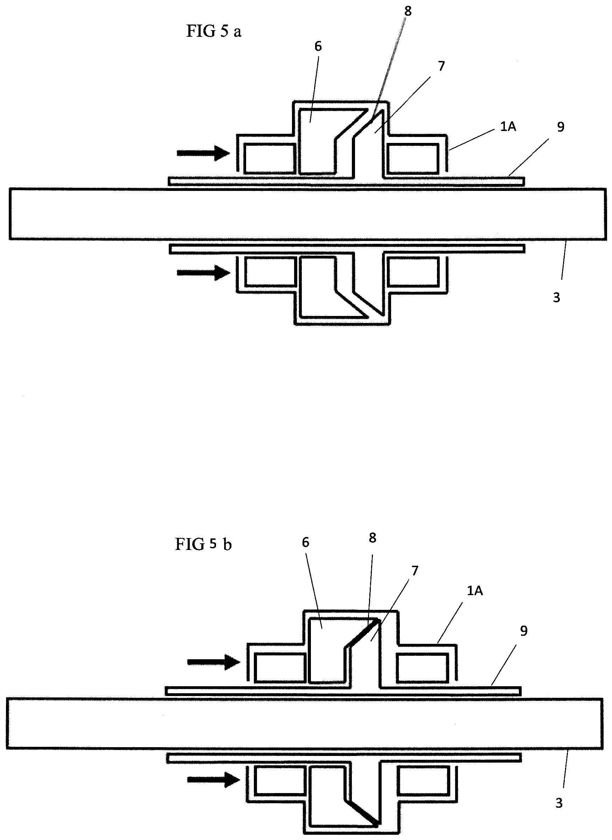

Les figures 5a et 5b illustrent un fonctionnement similaire de l'embrayage 5. L'embrayage 5 est dans ce cas un embrayage à cônes, avec l'élément 6 menant formé d'une roue dentée présentant intérieurement une partie conique dite femelle, et l'élément 7 mené formé, au niveau de sa partie 8 active, d'un cône constituant une partie mâle apte à venir s'insérer dans la partie conique femelle de la roue dentée en position embrayée de l'embrayage 5 correspondant à la position rapprochée de l'élément 6 menant de l'élément 7 mené.

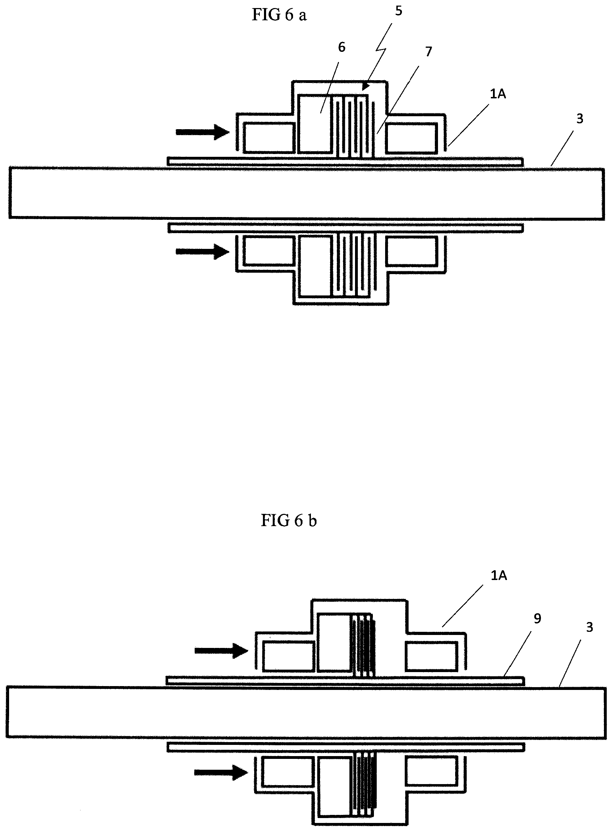

Les figures 6a et 6b illustrent également un fonctionnement similaire de l'embrayage 5. L'embrayage 5 est dans ce cas un embrayage à disques, avec l'élément menant formé d'une roue dentée solidaire en déplacement d'une pluralité de disques aptes à coopérer par contact d'appui avec une série de disques formant la partie active de l'élément mené.

On note que dans ces modes de réalisation, le manchon 9 fait partiellement saillie du corps de boîtier à l'état monté du manchon sur l'arbre de sortie.

Indépendamment du mode de réalisation de l'embrayage, le fonctionnement est toujours le même pour le passage de la position débrayée à la position embrayée de l'embrayage 5. L'opérateur actionne l'organe 11 de manœuvre, qui entraîne un déplacement à coulissement du corps 1A de boîtier le long de l'arbre de sortie, dans le sens d'un rapprochement de l'élément 6 menant de l'élément 7 mené. L'organe 12 de rappel élastiquement déformable rappelle l'élément 6 menant et le corps 1A de boîtier en position écartée de l'élément 7 mené, cette position écartée correspondant à la position débrayée de l'embrayage 5. L'organe 12 de rappel est donc actif à l'encontre de l'organe de manœuvre et de l'entraînement en déplacement à coulissement du corps 1A de boîtier dans le sens d'un rapprochement de l'élément menant de l'élément mené.

Pour permettre un tel fonctionnement, l'élément 7 mené est limité en déplacement axial le long de l'arbre 3 de sortie au moins dans le sens d'un écartement de l'élément 6 menant. Cette limitation en déplacement axial est ici obtenue par les moyens de solidarisation en rotation de l'élément 7 mené et de l'arbre 3 de sortie.

À nouveau, les moyens de solidarisation en rotation de l'élément mené et de l'arbre 3 de sortie peuvent être divers et variés. Dans l'exemple représenté aux figures 11a et 11b, où le manchon 9 fait partiellement saillie du corps 1A du boîtier, le manchon 9 est monté solidaire en rotation de l'arbre 3 de sortie par l'intermédiaire d'au moins un organe 15 de liaison disposé à l'extérieur du corps 1A de boîtier 1.

En l'occurrence, les organes 15 de liaison sont ici au nombre de deux et sont formés par des goupilles disposées de part et d'autre du corps 1A de boîtier, ces goupilles traversant l'arbre de sortie et s'insérant à chacune de leurs extrémités dans un orifice traversant du manchon.

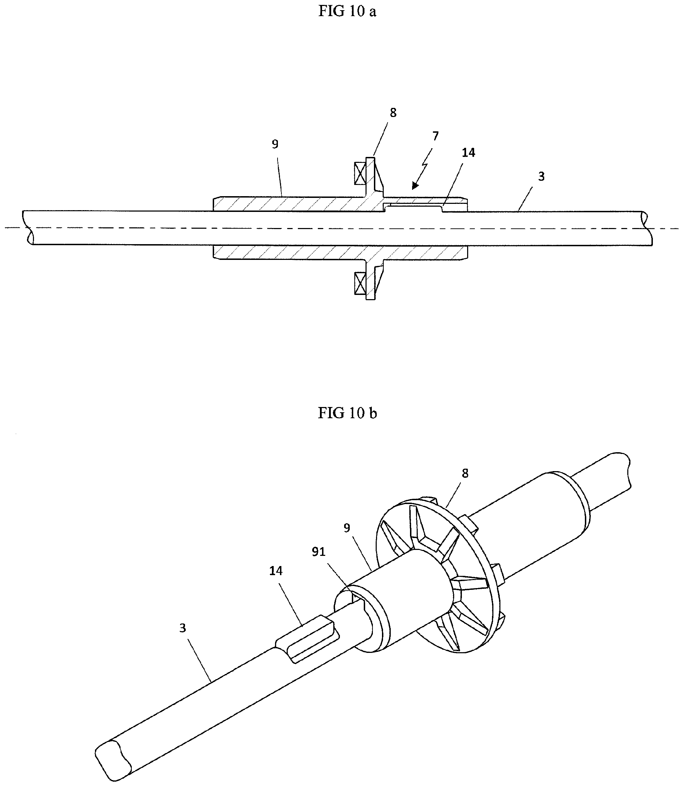

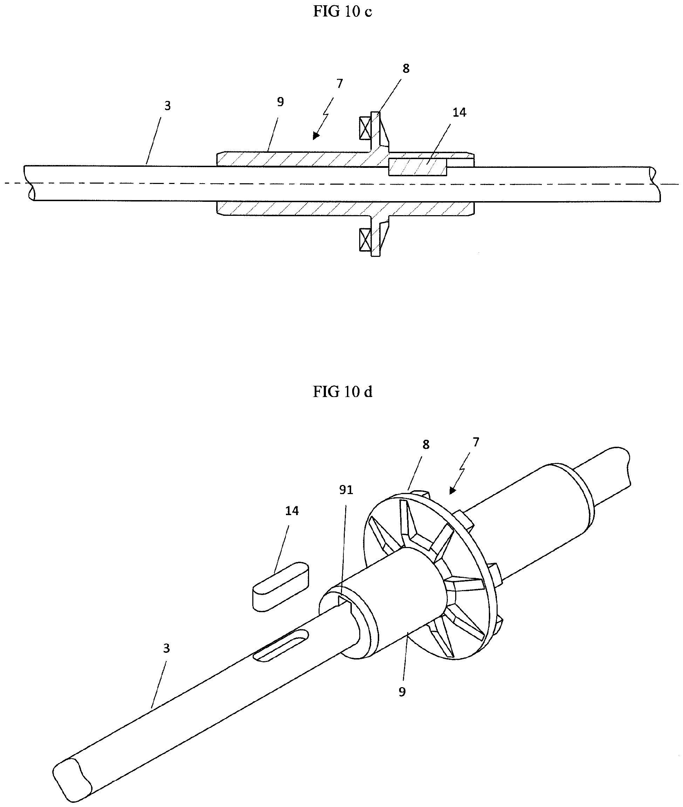

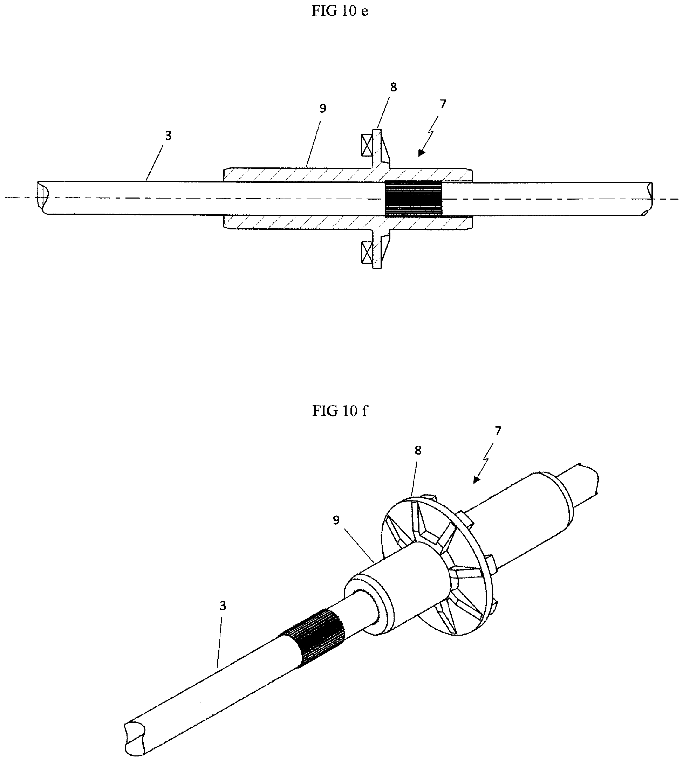

Dans l'exemple représenté aux figures 10A à 10D, le manchon 9 est intérieurement rainuré longitudinalement et est monté solidaire en rotation de l'arbre 3 de sortie par l'intermédiaire d'au moins une saillie 14 radiale externe de l'arbre 3 de sortie, cette saillie 14 radiale externe étant réalisée d'une seule pièce avec l'arbre 3 de sortie ou formée d'au moins un élément rapporté sur l'arbre 3 de sortie, cette au moins une saillie 14 radiale externe s'insérant à coulissement dans une rainure 91 longitudinale interne du manchon 9.

Cette rainure 91 longitudinale interne du manchon 9 peut être borgne, comme dans l'exemple de la figure 10D, pour limiter le déplacement axial de l'élément 7 mené dans le sens d'un écartement de l'élément menant.

En variante, une butée axiale de limitation en déplacement axial de l'élément mené dans le sens d'un écartement de l'élément menant peut être prévue sur l'arbre de sortie, comme représenté à la figure 10B ou à la figure 10F. Dans la figure 10F, des stries longitudinales sont ménagées sur l'arbre de sortie et un épaulement circonférentiel interne est ménagé sur le manchon.

Dans ces modes de réalisation, il apparaît que l'arbre 3 de sortie est, en position fermée de l'enceinte 1B du boîtier 1, monté de manière amovible à l'intérieur de l'enceinte 1B du boîtier 1.

Il suffit en effet d'enlever les goupilles ou de faire coulisser de manière relative le corps 1A de boîtier et l'arbre 3 de sortie pour obtenir la séparation de l'arbre 3 de sortie du corps 1A de boîtier.

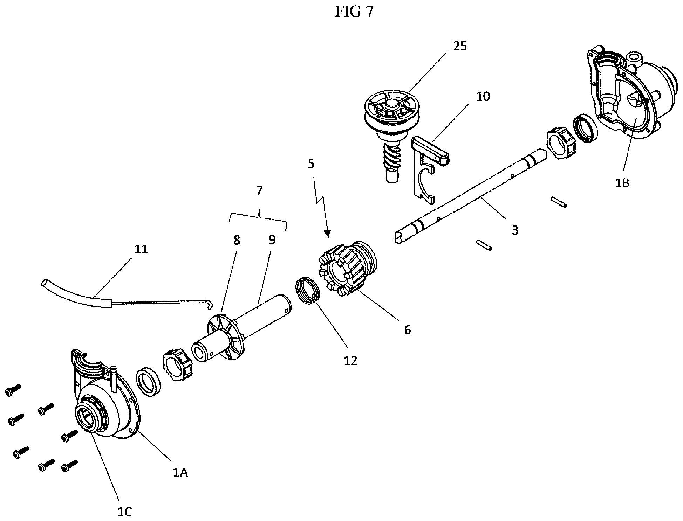

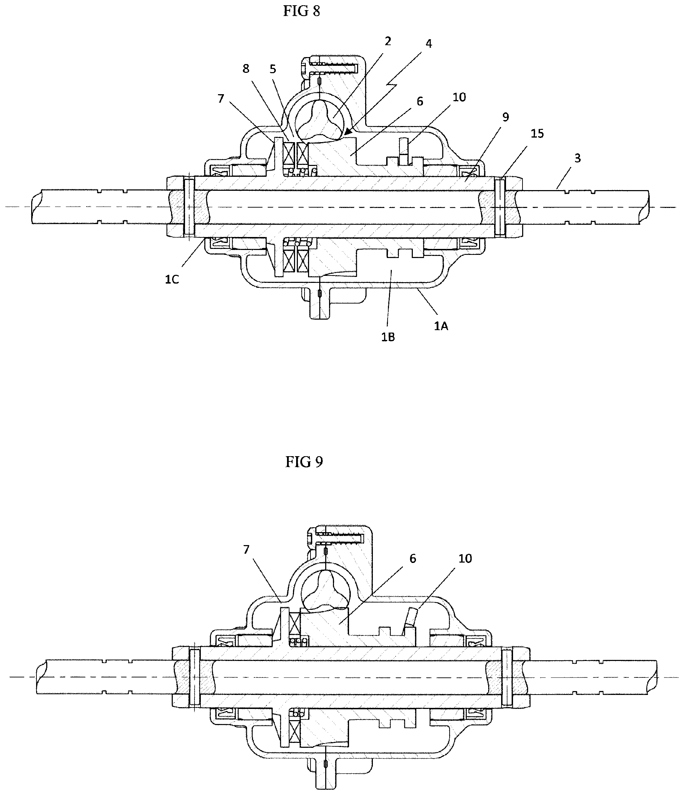

La commande d'embrayage pour le passage de l'embrayage 5 de la position débrayée à la position embrayée peut également s'opérer à l'aide d'un dispositif de commande logé au moins partiellement à l'intérieur du corps 1A de boîtier, comme illustré aux figures 7 à 9 par exemple. Dans ce cas, l'organe 10 de commande en rapprochement de l'élément menant de l'élément mené est formé par une fourchette logée partiellement à l'intérieur du boîtier, cette fourchette étant déplaçable angulairement, sous l'action d'un organe 11 de manœuvre formé par un câble couplé à une extrémité à ladite fourchette et à l'autre extrémité à un levier pivotant équipant le guidon de l'engin. Cette fourchette vient en prise avec une gorge annulaire de l'élément menant.

Le déplacement angulaire de la fourchette entraîne un déplacement axial de l'élément menant dans le sens d'un rapprochement de l'élément mené. À nouveau, l'élément menant peut être une roue dentée munie, sur l'une de ses faces, de dents et l'élément mené un manchon entouré d'un plateau à dents, l'embrayage étant du type à crabotage, comme décrit précédemment.

Dans ce mode de réalisation, le manchon est de préférence monté fixe axialement sur l'arbre 3 de sortie et solidaire en rotation de ce dernier. Le manchon comporte extérieurement au moins un épaulement périphérique externe qui limite le déplacement relatif axial du corps 1A de boîtier et du manchon 9.

Dans ce mode de réalisation, le passage de la position débrayée à la position embrayée de l'embrayage 5 s'opère comme suit : l'opérateur actionne l'organe 11 de manœuvre, qui entraîne un déplacement angulaire de la fourchette. Celle-ci pousse l'élément menant en direction de la partie active de l'élément mené, un organe 12 de rappel élastiquement déformable et disposé entre les éléments menant et mené rappelle l'élément menant en position écartée de l'élément mené.

Dans les exemples de réalisation décrits, à chaque fois, le manchon 9 de l'élément 6 mené est soit monté fixe axialement sur l'arbre 3 de sortie, soit limité en déplacement axial sur l'arbre 3 de sortie, dans le sens d'un écartement de l'élément menant.

## Revendications

1. Boîtier (1) de transmission comprenant un corps (1A) de boîtier (1) délimitant une enceinte (1B) et, disposés au moins partiellement à l'intérieur de ladite enceinte (1B), un arbre (2) d'entrée, un arbre (3) de sortie et un mécanisme (4) de transmission du mouvement de l'arbre (2) d'entrée à l'arbre (3) de sortie, ce mécanisme (4) de transmission de mouvement comprenant au moins un embrayage (5), l'embrayage (5) comprenant un élément (6) menant et un élément (7) mené, l'élément (7) mené étant monté solidaire en rotation de l'arbre (3) de sortie, au moins l'un des éléments mené (7) ou menant (6) de l'embrayage (5) étant monté déplaçable pour le passage des éléments menant (6) et mené (7) de l'embrayage (5) d'une position écartée l'un de l'autre correspondant à la position débrayée de l'embrayage (5) à une position rapprochée l'un de l'autre correspondant à la position embrayée de l'embrayage (5), le mécanisme de transmission de mouvement comprenant en outre un manchon (9) coaxial à l'arbre (3) de sortie, le manchon (9) étant interposé entre l'arbre (3) de sortie et le corps (1A) de boîtier (1), **caractérisé en ce que** l'élément (7) mené de l'embrayage (5) comprend une partie (8) active d'embrayage (5) portée par le manchon (9), la partie (8) active d'embrayage (5) étant en contact d'appui avec l'élément (6) menant de l'embrayage (5) en position embrayée de l'embrayage (5), le manchon (9) étant monté solidaire en rotation de l'arbre (3) de sortie et réalisé d'une seule pièce avec la partie (8) active de l'élément (7) mené.

2. Boîtier (1) de transmission selon la revendication 1, **caractérisé en ce que** l'arbre (3) de sortie est, en position fermée de l'enceinte (1B) du boîtier (1), monté de manière amovible à l'intérieur de l'enceinte (1B) du boîtier (1).

3. Boîtier (1) de transmission selon l'une des revendication 1 ou 2, **caractérisé en ce que** l'arbre (3) de sortie est un arbre traversant le corps (1A) de boîtier (1) et faisant saillie du corps (1A) de boîtier (1) à travers deux ouvertures (1C) ménagées dans le corps (1A) de boîtier (1), et **en ce que** le manchon (9) est au niveau de ces ouvertures (1C), interposé entre l'arbre (3) de sortie et le corps (1A) de boîtier (1).

4. Boîtier (1) de transmission selon l'une des revendications 1 à 3, **caractérisé en ce que** l'élément (6) menant est enfilé sur le manchon (9).

5. Boîtier (1) de transmission selon l'une des revendications 1 à 4, **caractérisé en ce que** le manchon (9) est intérieurement rainuré longitudinalement et est monté solidaire en rotation de l'arbre (3) de sortie par l'intermédiaire d'au moins une saillie (14) radiale externe de l'arbre (3) de sortie, cette saillie (14) radiale externe étant réalisée d'une seule pièce avec l'arbre (3) de sortie ou formée d'au moins un élément rapporté sur l'arbre (3) de sortie, cette au moins une saillie (14) radiale externe s'insérant à coulissement dans une rainure (91) longitudinale interne du manchon (9).

6. Boîtier (1) de transmission selon l'une des revendications 1 à 5, **caractérisé en ce que** le manchon (9) fait au moins partiellement saillie du corps (1A) de boîtier (1).

7. Boîtier (1) de transmission selon la revendication 6, **caractérisé en ce que** le manchon (9) est monté solidaire en rotation de l'arbre (3) de sortie par l'intermédiaire d'au moins un organe (15) de liaison disposé à l'extérieur du corps (1A) de boîtier (1).

8. Boîtier (1) de transmission selon l'une des revendications 1 à 7, **caractérisé en ce que** l'élément (6) menant de l'embrayage (5) est un élément rotatif apte à être entrainé en rotation par l'arbre (2) d'entrée.

9. Boîtier (1) de transmission selon l'une des revendications 1 à 8, **caractérisé en ce que** l'embrayage (5) est un embrayage (5) non progressif, de préférence à crabotage, ou un embrayage (5) progressif, de préférence à cônes ou à disques.

10. Boîtier (1) de transmission selon l'une des revendications 1 à 9, **caractérisé en ce que** le boîtier (1) comprend, pour le passage de la position débrayée à la position embrayée, un dispositif (10,11) de commande d'embrayage (5).

11. Boîtier (1) de transmission selon l'une des revendications 1 à 10, **caractérisé en ce que** l'élément (7) mené est limité en déplacement axial au moins dans le sens d'un écartement de l'élément (6) menant et **en ce que** le boîtier (1) comprend au moins un organe (12) de rappel des éléments menant (6) et mené (7) en position écartée l'un de l'autre correspondant à la position débrayée.

12. Boîtier (1) de transmission selon l'une des revendications précédentes, **caractérisé en ce que** le corps (1A) de boîtier (1) est formé d'au moins deux coquilles (1A1, 1A2) assemblées l'une à l'autre en position fermée du boîtier (1).

13. Engin (20) roulant équipé d'un boîtier (1) de transmission comprenant un corps (1A) de boîtier (1) délimitant une enceinte (1B) et, disposés au moins partiellement à l'intérieur de ladite enceinte (1B), un arbre (2) d'entrée, un arbre (3) de sortie et un mécanisme (4) de transmission du mouvement de l'arbre (2) d'entrée à l'arbre (3) de sortie, ce mécanisme (4) de transmission de mouvement comprenant au moins un embrayage (5), l'embrayage (5) comprenant un élément (6) menant et un élément (7) mené, l'élément (7) mené étant monté solidaire en rotation de l'arbre (3) de sortie, au moins l'un des éléments mené (7) ou menant (6) de l'embrayage (5) étant monté déplaçable axialement le long de l'arbre (3) de sortie pour le passage des éléments menant (6) et mené (7) de l'embrayage (5) d'une position écartée l'un de l'autre correspondant à la position débrayée de l'embrayage (5) à une position rapprochée l'un de l'autre correspondant à la position embrayée de l'embrayage (5), l'élément (7) mené de l'embrayage (5) comprenant une partie (8) active d'embrayage (5) et un manchon (9) qui porte la partie (8) active d'embrayage (5), la partie (8) active d'embrayage (5) étant en contact d'appui avec l'élément (6) menant de l'embrayage (5) en position embrayée de l'embrayage (5), le manchon (9) étant coaxial à l'arbre (3) de sortie et monté solidaire en rotation de l'arbre (3) de sortie, **caractérisé en ce que** le boîtier (1) de transmission est conforme à l'une des revendications 1 à 12, et **en ce que** l'arbre (3) de sortie du boîtier (1) de transmission est l'arbre d'entraînement des roues (26) de l'engin (20).

## Patentansprüche

1. Getriebegehäuse (1), umfassend einen Körper (1A) des Gehäuses (1), der ein Behältnis (1B) begrenzt und, mindestens teilweise im Inneren des Behältnisses (1B) angeordnet, eine Eingangswelle (2), eine Ausgangswelle (3) und einen Übertragungsmechanismus (4) der Bewegung der Eingangswelle (2) an die Ausgangswelle (3), wobei dieser Übertragungsmechanismus (4) der Bewegung mindestens eine Kupplung (5) umfasst, wobei die Kupplung (5) ein führendes Element (6) und ein geführtes Element (7) umfasst, wobei das geführte Element (7) mit der Ausgangswelle (3) rotatorisch fest verbunden angebracht ist, wobei mindestens eins von dem geführten (7) oder führenden (6) Element der Kupplung (5) für den Wechsel des führenden (6) und geführten (7) Elements der Kupplung (5) aus einer voneinander beabstandeten Position, die der ausgekuppelten Position der Kupplung (5) entspricht, in eine aneinander angenäherte Position, die der eingekuppelten Position der Kupplung (5) entspricht, verlagerbar angebracht ist, wobei der Übertragungsmechanismus der Bewegung ferner eine zu der Ausgangswelle (3) koaxiale Hülse (9) umfasst, wobei die Hülse (9) zwischen der Ausgangswelle (3) und dem Körper (1A) des Gehäuses (1) angeordnet ist, **dadurch gekennzeichnet, dass** das geführte Element (7) der Kupplung (5) einen aktiven Teil (8) der Kupplung (5) umfasst, der von der Hülse (9) getragen wird, wobei der aktive Teil (8) der Kupplung (5) in Stützkontakt mit dem führenden Element (6) der Kupplung (5) in eingekuppelter Position der Kupplung (5) ist, wobei die Hülse (9) mit der Ausgangswelle (3) rotatorisch fest verbunden angebracht ist und mit dem aktiven Teil (8) des geführten Elements (7) in einem einzigen Teil hergestellt ist.

2. Getriebegehäuse (1) nach Anspruch 1, **dadurch gekennzeichnet, dass** die Ausgangswelle (3) in geschlossener Position des Behältnisses (1B) des Gehäuses (1) lösbar im Inneren des Behältnisses (1B) des Gehäuses (1) angebracht ist.

3. Getriebegehäuse (1) nach einem der Ansprüche 1 oder 2, **dadurch gekennzeichnet, dass** die Ausgangswelle (3) eine Welle ist, die den Körper (1A) des Gehäuses (1) durchquert und aus dem Körper (1A) des Gehäuses (1) durch zwei Öffnungen (1C) hervorragt, die in dem Körper (1A) des Gehäuses (1) ausgebildet sind, und dass die Hülse (9) im Bereich dieser Öffnungen (1C) zwischen der Ausgangswelle (3) und dem Körper (1A) des Gehäuses (1) angeordnet ist.

4. Getriebegehäuse (1) nach einem der Ansprüche 1 bis 3, **dadurch gekennzeichnet, dass** das führende Element (6) auf die Hülse (9) aufgesteckt ist.

5. Getriebegehäuse (1) nach einem der Ansprüche 1 bis 4, **dadurch gekennzeichnet, dass** die Hülse (9) innen längs gerillt ist und mit der Ausgangswelle (3) über mindestens einen äußeren radialen Vorsprung (14) der Ausgangswelle (3) rotatorisch fest verbunden angebracht ist, wobei dieser äußere radiale Vorsprung (14) in einem Teil mit der Ausgangswelle (3) hergestellt ist oder aus mindestens einem Element gebildet ist, das auf der Ausgangswelle (3) angesetzt ist, wobei dieser mindestens eine äußere radiale Vorsprung (14) in eine innere Längsrille (91) der Hülse (9) hineingleitet.

6. Getriebegehäuse (1) nach einem der Ansprüche 1 bis 5, **dadurch gekennzeichnet, dass** die Hülse (9) mindestens teilweise aus dem Körper (1A) des Gehäuses (1) hervorragt.

7. Getriebegehäuse (1) nach Anspruch 6, **dadurch gekennzeichnet, dass** die Hülse (9) mit der Ausgangswelle (3) über mindestens ein Verbindungsorgan (15) rotatorisch fest verbunden angebracht ist, das außerhalb des Körpers (1A) des Gehäuses (1) angeordnet ist.

8. Getriebegehäuse (1) nach einem der Ansprüche 1 bis 7, **dadurch gekennzeichnet, dass** das führende Element (6) der Kupplung (5) ein Rotationselement ist, das imstande ist, von der Eingangswelle (2) rotierend angetrieben zu sein.

9. Getriebegehäuse (1) nach einem der Ansprüche 1 bis 8, **dadurch gekennzeichnet, dass** die Kupplung (5) eine nicht progressive Kupplung (5), vorzugsweise mit Klauen, oder eine progressive Kupplung (5), vorzugsweise mit Konen oder mit Scheiben, ist.

10. Getriebegehäuse (1) nach einem der Ansprüche 1 bis 9, **dadurch gekennzeichnet, dass** das Gehäuse (1) für den Wechsel aus der ausgekuppelten Position in die eingekuppelte Position eine Steuervorrichtung (10, 11) der Kupplung (5) umfasst.

11. Getriebegehäuse (1) nach einem der Ansprüche 1 bis 10, **dadurch gekennzeichnet, dass** das geführte Element (7) in axialer Verlagerung mindestens in Richtung einer Beabstandung vom führenden Element (6) axial begrenzt ist und dass das Gehäuse (1) mindestens ein Rückstellorgan (12) des führenden (6) und geführten (7) Elements in voneinander beabstandete Position umfasst, die der ausgekuppelten Position entspricht.

12. Getriebegehäuse (1) nach einem der vorangehenden Ansprüche, **dadurch gekennzeichnet, dass** der Körper (1A) des Gehäuses (1) aus mindestens zwei Schalen (1A1, 1A2) gebildet ist, die in geschlossener Position des Gehäuses (1) aneinander verbunden sind.

13. Radfahrzeug (20), ausgestattet mit einem Getriebegehäuse (1), umfassend einen Körper (1A) des Gehäuses (1), der ein Behältnis (1B) begrenzt und, mindestens teilweise im Inneren des Behältnisses (1B) angeordnet, eine Eingangswelle (2), eine Ausgangswelle (3) und einen Übertragungsmechanismus (4) der Bewegung der Eingangswelle (2) an die Ausgangswelle (3), wobei dieser Übertragungsmechanismus (4) der Bewegung mindestens eine Kupplung (5) umfasst, wobei die Kupplung (5) ein führendes Element (6) und ein geführtes Element (7) umfasst, wobei das geführte Element (7) mit der Ausgangswelle (3) rotatorisch fest verbunden angebracht ist, wobei mindestens eins von dem geführten (7) oder führenden (6) Element der Kupplung (5) axial verlagerbar entlang der Ausgangswelle (3) für den Wechsel des führenden (6) und geführten (7) Elements der Kupplung (5) aus einer voneinander beabstandeten Position, die der ausgekuppelten Position der Kupplung (5) entspricht, in eine aneinander angenäherte Position, die der eingekuppelten Position der Kupplung (5) entspricht, angebracht ist, wobei das geführte Element (7) der Kupplung (5) einen aktiven Teil (8) der Kupplung (5) und eine Hülse (9) umfasst, die den aktiven Teil (8) der Kupplung (5) trägt, wobei der aktive Teil (8) der Kupplung (5) in Stützkontakt mit dem führenden Element (6) der Kupplung (5) in eingekuppelter Position der Kupplung (5) ist, wobei die Hülse (9) koaxial zur Ausgangswelle (3) und mit der Ausgangswelle (3) rotatorisch fest verbunden angebracht ist, **dadurch gekennzeichnet, dass** das Getriebegehäuse (1) nach einem der Ansprüche 1 bis 12 ist und dass die Ausgangswelle (3) des Getriebegehäuses (1) die Antriebswelle der Räder (26) des Fahrzeugs (20) ist.

## Claims

1. A transmission housing (1) comprising a housing (1) body (1A) delimiting an enclosure (1B), and, arranged at least partially inside said enclosure (1B), an input shaft (2), an output shaft (3) and a mechanism (4) for transmitting the movement from the input shaft (2) to the output shaft (3), this movement transmission mechanism (4) comprising at least one clutch (5), the clutch (5) comprising a driving element (6) and a driven element (7), the driven element (7) being mounted secured in rotation with the output shaft (3), at least one of the driven (7) or driving (6) elements of the clutch being mounted movably for the passage of the driving (6) and driven (7) elements of the clutch (5) from a position separated from one another corresponding to the disengaged position of the clutch (5) to a position close to one another corresponding to the engaged position of the clutch (5), the movement transmission mechanism further comprising a sleeve (9) coaxial with the output shaft (3), the sleeve (9) being inserted between the output shaft (3) and the housing (1) body (1A), **characterized in that** the driven element (7) of the clutch (5) comprises a clutch (5) active part (8) carried by the sleeve (9), the clutch (5) active part (8) being in bearing contact with the driving element (6) of the clutch (5) in the engaged position of the clutch (5), the sleeve (9) being mounted secured in rotation with the output shaft (3) and made in a single piece with the active part (8) of the driven element (7).

2. The transmission housing (1) according to claim 1, **characterized in that** the output shaft (3) is, in the closed position of the enclosure (1B) of the housing (1), mounted removably inside the enclosure (1B) of the housing (1).

3. The transmission housing (1) according to one of claims 1 or 2, **characterized in that** the output shaft (3) is a shaft passing through the housing (1) body (1A) and protruding from the housing (1) body (1A) through two openings (1C) arranged in the housing (1) body (1A), and **in that** the sleeve (9) is at these openings (1C), inserted between the output shaft (3) and the housing (1) body (1A).

4. The transmission housing (1) according to one of claims 1 to 3, **characterized in that** the driving element (6) is slipped onto the sleeve (9).

5. The transmission housing (1) according to one of claims 1 to 4, **characterized in that** the sleeve (9) is inwardly longitudinally grooved and is mounted secured in rotation with the output shaft (3) by means of at least one outer radial protrusion (14) of the output shaft (3), this outer radial protrusion (14) being made in a single piece with the output shaft (3) or formed by at least one element attached on the output shaft (3), this at least one outer radial protrusion (14) being slidingly inserted into an inner longitudinal groove (91) of the sleeve (9).

6. The transmission housing (1) according to one of claims 1 to 5, **characterized in that** the sleeve (9) protrudes at least partially from the housing (1) body (1A).

7. The transmission housing (1) according to claim 6, **characterized in that** the sleeve (9) is mounted secured in rotation with the output shaft (3) by means of at least one connecting member (15) arranged outside the housing (1) body (1A).

8. The transmission housing (1) according to one of claims 1 to 7, **characterized in that** the driving element (6) of the clutch (5) is a rotating element able to be driven in rotation by the input shaft (2).

9. The transmission housing (1) according to one of claims 1 to 8, **characterized in that** the clutch (5) is a non-progressive clutch (5), preferably with dog-clutch, or a progressive clutch (5), preferably with cones or with discs.

10. The transmission housing (1) according to one of claims 1 to 9, **characterized in that** the housing (1) comprises, for the passage from the disengaged position to the engaged position, a device (10, 11) for controlling the clutch (5).

11. The transmission housing (1) according to one of claims 1 to 10, **characterized in that** the driven element (7) is limited in axial movement at least in the direction of a separation from the driving element (6) and **in that** the housing (1) comprises at least one member (12) for returning the driving (6) and driven (7) elements to the position separated from one another corresponding to the disengaged position.

12. The transmission housing (1) according to one of the preceding claims, **characterized in that** the housing (1) body (1A) is formed by at least two shells (1A1, 1A2) which are assembled to one another in the closed position of the housing (1).

13. A wheeled vehicle (20) equipped with a transmission housing comprising a housing (1) body (1A) delimiting an enclosure (1B) and, arranged at least partially inside said enclosure (1B), an input shaft (2), an output shaft (3) and a mechanism (4) for transmitting the movement from the input shaft (2) to the output shaft (3), this mechanism (4) for transmitting movement comprising at least one clutch (5), the clutch (5) comprising a driving element (6) and a driven element (7), the driven element (7) being mounted secured in rotation with the output shaft (3), at least one of the driven (7) or driving (6) elements of the clutch (5) being mounted axially movably along the output shaft (3) for the passage of the driving (6) and driven (7) elements of the clutch from a position separated from one another corresponding to the disengaged position of the clutch (5) to a position close to one another corresponding to the engaged position of the clutch (5), the driven element (7) of the clutch (5) comprising a clutch (5) active part (8) and a sleeve (9) which carries the clutch (5) active part (8), the clutch (5) active part (8) being in bearing contact with the driven element (6) of the clutch (5) in the engaged position of the clutch (5), the sleeve (9) being coaxial with the output shaft (3) and mounted secured in rotation with the output shaft (3), **characterized in that** the transmission housing (1) is according to one of claims 1 to 12, and **in that** the output shaft (3) of the transmission housing (1) is the drive shaft of the wheels (26) of the vehicle (20).
